# EUROPÄISCHE PATENTANMELDUNG

(11) **EP 1 168 388 A2**
(43) Veröffentlichungstag der Anmeldung: **02.01.2002**
(21) Anmeldenummer: 01110277.9
(22) Anmeldetag: 26.04.2001
(51) Int. Cl.: H01G 9/045

(54) **Verfahren zur Herstellung von Elektroden sowie damit hergestellte Elektroden**

(30) Priorität: 30.06.2000 DE 10031906
(71) Anmelder: Becromal S.p.A., I-20089 Quinto de' Stampi Rozzano (MI) (IT)
(72) Erfinder: Chiavarotti, Giovanni Pietro, 20152 Milano (IT)
(74) Vertreter: KEIL & SCHAAFHAUSEN

(57) **Zusammenfassung**

Es werden ein Verfahren zur Herstellung von Elektroden für Elektrolyt-Kondensatoren aus leitendem Elektrodenmaterial, insbesondere aus einer Folie, wie einer Aluminiumfolie, welche zur Vergrößerung der Oberfläche einem chemischen oder elektrochemischen Ätzprozess ausgesetzt wird, sowie mit dem Verfahren hergestellte Elektroden beschrieben. Dabei ist während des Ätzprozesses wenigstens eine Zone der Oberfläche des Elektrodenmaterials mit einem ätzfesten Belag und/oder von einer gesonderten Schutzabschirmung in einer Ätzzelle abgedeckt. Die Elektrode wird nach dem Ätzen derart aus dem Elektrodenmaterial ausgeschnitten, ausgestanzt oder dgl. herausgearbeitet, dass die geätzte Zone wenigstens einen Randbereich, insbesondere einen Randstreifen der Elektrode bildet.

## Beschreibung

Die Erfindung betrifft ein Verfahren zur Herstellung von Elektroden für Elektrolyt-Kondensatoren aus leitendem Elektrodenmaterial, insbesondere aus einer Folie wie Aluminiumfolie, welche zur Vergrößerung der Oberfläche einem chemischen oder elektrochemischen Ätzprozess ausgesetzt wird, sowie mit einem solchen Verfahren hergestellte Elektroden.

Auf dem Gebiet der Elektrolyt-Kondensatoren ist es bekannt, bspw. Aluminiumfolien als Elektrodenmaterial zu verwenden, die einem Ätzprozess unterzogen worden sind, um die wirksame Oberfläche zu vergrößern. Bei einem elektrochemischen Ätzprozess wird die Aluminiumfolie bspw. zwischen zwei leitenden Platten einer Ätzzelle angeordnet, die in eine leitende Elektrolytlösung eingetaucht sind. Der Ätzprozess kann dann in verschiedenen Polerisationskonfigurationen stattfinden: Bspw. wird die Aluminiumfolie an den positiven Pol einer Stromquelle und die leitenden Platten der Ätzzelle an den negativen Pol der Stromquelle angeschlossen, wobei ein kontinuierlicher oder gepulster Strom fließt. Eine weitere Möglichkeit besteht darin, die Aluminiumfolie zwischen zwei leitenden Platten anzuordnen, zwischen denen ein Wechselstrom fließt. Außerdem ist es bekannt, bei anodischen Folien nach dem Ätzprozess eine anodische Oxidation durchzuführen, die das Wachstum von Aluminiumoxid auf der Folienoberfläche ermöglicht. Häufig werden für bestimmte Elektrolyt-Kondensatoren aber auch Elektroden mit einer geätzten Oberfläche benötigt, bei denen bspw. im Randbereich Anschlusskontakte anzubringen sind. An diesen Randbereichen soll die Elektrode einen guten elektrischen und thermischen Kontakt aufweisen, so dass der äquivalente Serienwiderstand (ESR) und der Leistungsverbrauch verbessert werden, wenn die Elektroden bspw. zur der Herstellung des elektrolytischen Kondensators eingerollt werden. Das Ätzen beeinträchtigt derartige gute Kontakte.

Aufgabe der Erfindung ist es, auf einfache Weise Elektroden zu schaffen, die insbesondere in ihrem Randbereich einen guten elektrischen und thermischen Kontakt bieten.

Diese Aufgabe wird bei einem Verfahren der eingangs genannten Art im Wesentlichen dadurch gelöst, dass während des Ätzprozesses wenigstens eine Zone der Oberfläche des Elektrodenmaterials mit einem ätzfesten Belag und/oder von einer gesonderten Schutzabschirmung in der Ätzzelle abgedeckt ist und die Elektrode nach dem Ätzen aus dem Elektrodenmaterial derart ausgeschnitten, ausgestanzt oder dgl. herausgearbeitet wird, dass die nicht geätzte Zone wenigstens einen Randbereich, insbesondere Randstreifen, der Elektrode bildet.

Mit diesem Verfahren können nicht geätzte Zonen in beliebiger Form einfach auf der Oberfläche des Elektrodenmaterials ausgebildet werden, so dass bei der anschließenden Bildung der Elektroden deren Ränder ungeätzt sind. Damit kann das Herstellungsverfahren an spezielle Anforderungen für bestimmte Elektroden angepasst werden. Insbesondere ist es möglich, großflächiges Elektrodenmaterial in Form von Bahnen zu verwenden, aus dem dann einzelne Elektroden, bspw. in Form von aufwickelbaren Streifenelektroden, ausgestanzt werden. Auf diese Weise lässt sich für unterschiedliche Elektrodentypen der Herstellungsprozess vereinheitlichen und rationalisieren, wodurch eine erhebliche Kostenreduzierung erreicht werden kann. Außerdem ist die Handhabung von großem, bspw. bahnartigem Folienmaterial beim Ätzen einfacher als die Handhabung einzelner schmaler Elektroden. Die Schaffung von Kontaktzonen, welche einen sehr guten elektrischen und thermischen Kontakt bieten, durch besondere Oberflächenbearbeitung ist entbehrlich. Das erfindungsgemäße Verfahren ist zur Herstellung von als Anoden und Kathoden verwendeten Elektroden geeignet.

Bei einer einfachen Ausgestaltung des erfindungsgemäßen Verfahrens zur Herstellung dieser Elektroden kann als abschirmender Belag eine Schicht oder Folie dienen, welche auf die Oberfläche bspw. durch Auftragen, Auflegen, Aufkleben oder dgl. aufgebracht und nach dem Ätzen wieder abgezogen wird. Ein solches Verfahren lässt sich insbesondere bei der Herstellung standardisierter Elektrodentypen besonders günstig einsetzen.

Es ist ebenso denkbar, dass als Belag ein Lack oder ein Kunstharz dient, wobei der Lack oder der Kunstharz bspw. durch Sprühen oder Pinseln auf die Oberfläche aufgebracht und nach dem Ätzen mittels einer bspw. organischen Lösung abgelöst wird. Mit einem solchen Verfahren lässt sich auch ein in seiner geometrischen Gestalt komplizierter Belag leicht auf die Oberfläche aufbringen. Insbesondere bei Verwendung einer Maske können die Zonen auf dem Elektrodenmaterial präzise ausgebildet werden.

Bei einem elektrochemischen Ätzen ist der Belag vorzugsweise als Isoliermaterial ausgebildet und bildet während des Ätzprozesses eine elektrische Abschirmung auf dem leitenden Elektrodenmaterial. Das Isoliermaterial kann bspw. aus elektrisch nicht leitendem Kunststoff bestehen und ist zwischen dem Elektrodenmaterial und den leitenden Platten einer Ätzzelle angeordnet. In diesem Fall kommt das ätzende Elektrolyt nicht in Kontakt mit der abgeschirmten Zone, da das Isoliermaterial die Oberfläche des Elektrodenmaterials direkt berührt, so dass in den abgeschirmten Zonen kein Ätzen erfolgt.

Gemäß einer anderen Ausgestaltung des Verfahrens besteht die Schutzabschirmung als gesondertes Element aus einem nicht leitenden Material und ist in der Ätzzelle so zwischen dem Elektrodenmaterial und den leitenden Platten der Ätzzelle angeordnet, dass sie in direktem Kontakt mit dem Elektrodenmaterial steht und während des elektrochemischen Ätzprozesses eine elektrische Abschirmung bildet.

Die Position der Schutzabschirmungen in der Ätzzelle ist besonders einfach zu handhaben und lässt so die gewünschte ungeätzte Oberfläche des Elektrodenmaterials während des kontinuierlichen Betriebs des Ätzprozesses einfach erreichen. Dazu ist die Schutzabschirmung bereits in der gewünschten Geometrie in der Ätzzelle angeordnet und muss nicht jeweils auf dem Elektrodenmaterial als Belag ausgebildet werden.

Es ist aber auch eine Kombination beider Ausgestaltungen des Verfahrens denkbar, wobei die Schutzabschirmung bspw. auch zur Fixierung des Elektrodenmaterials in der Ätzzelle dienen kann.

Bei der Herstellung von Streifenelektroden werden die Zonen vorzugsweise als parallele Streifen oder dgl. voneinander beabstandete, in Längsrichtung des z. B. als Bandmaterial ausgebildeten Elektrodenmaterials verlaufende Bereiche ausgebildet.

Wenn die Elektrode als Anode verwendet werden soll, wird das Elektrodenmaterial nach dem Ätzen einer anodischen Oxidation ausgesetzt. Dabei kann der Belag von den nicht zu ätzenden Flächen vorher abgelöst werden, so dass sowohl die geätzten als auch die nicht-geätzten Zonen oxidiert werden. Bei einer Verwendung der Elektrode als Kathode ist eine solche Behandlung nicht notwendig.

Vorzugsweise wird das Ätzen unter Ausbildung nicht-geätzter Zonen und ggf. die Oxidation auf beiden Seiten des Elektrodenmaterials durchgeführt. Dabei können die nicht-geätzten Zonen auf beiden Seiten des Elektrodenmaterials einander entsprechend ausgebildet werden, so dass die daraus gebildeten Elektroden von beiden Seiten dieselbe Struktur aufweisen. Bei speziellen Kondensatortypen ist allerdings auch eine asymmetrische Ausgestaltung der nicht-geätzten Zonen auf den beiden Seiten des Materials denkbar.

Zur Herstellung von Elektrodenstreifen werden aus dem z. B. bahnartigen Elektrodenmaterial entsprechende Elektrodenstreifen ausgeschnitten, wobei vorzugsweise mindestens ein Längsrand des Streifenmaterials nicht geätzt ist.

Eine rationelle Verarbeitung des Elektrodenmaterials ist insbesondere möglich, wenn aus großflächigem Elektrodenmaterial mehrere z.B. streifenartige Elektroden ausgeschnitten werden.

Ferner bezieht sich die Erfindung auf Elektroden aus einem leitenden Elektrodenmaterial, insbesondere einer z. B. als Bandmaterial ausgebildeten Folie, wie einer Aluminiumfolie, welches eine ein- oder beidseitig geätzte und ggf. anodisch oxidierte Oberfläche aufweist, wobei in wenigstens einem Randbereich, vorzugsweise Randstreifen der Oberfläche mindestens eine nicht-geätzte Zone ausgebildet ist. Dabei können Zonen auf jeder Seite des Elektrodenmaterials einander entsprechend angeordnet sein.

Bei der Ausgestaltung von Streifenelektroden sind aus dem z. B. bahnförmigen Elektrodenmaterial entsprechende Streifen in der Breite des daraus herzustellenden Kondensators so ausgeschnitten, dass vorzugsweise mindestens ein Rand der Streifenelektrode nicht geätzt ist.

Weitere Merkmale, Vorteile und Anwendungsmöglichkeiten der vorliegenden Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder ihrer Rückbeziehung.

### Es zeigen:

- Fig. 1: schematisch eine Anordnung zum Ätzen einer Elektrode nach einem ersten bekannten Verfahren;
- Fig. 2: schematisch eine Anordnung zum Ätzen der Elektrode nach einem zweiten bekannten Verfahren;
- Fig. 3: schematisch eine Anordnung zum Durchführen des erfindungsgemäßen Verfahrens mit einem auf dem Elektrodenmaterial aufgebrachten Belag, und
- Fig. 4: schematisch eine alternative Anordnung zum Durchführen des erfindungsgemäßen Verfahrens mit einer in einer Ätzzelle zwischen dem Elektrodenmaterial und leitenden Platten gesondert angeordneten Schutzabschirmung.

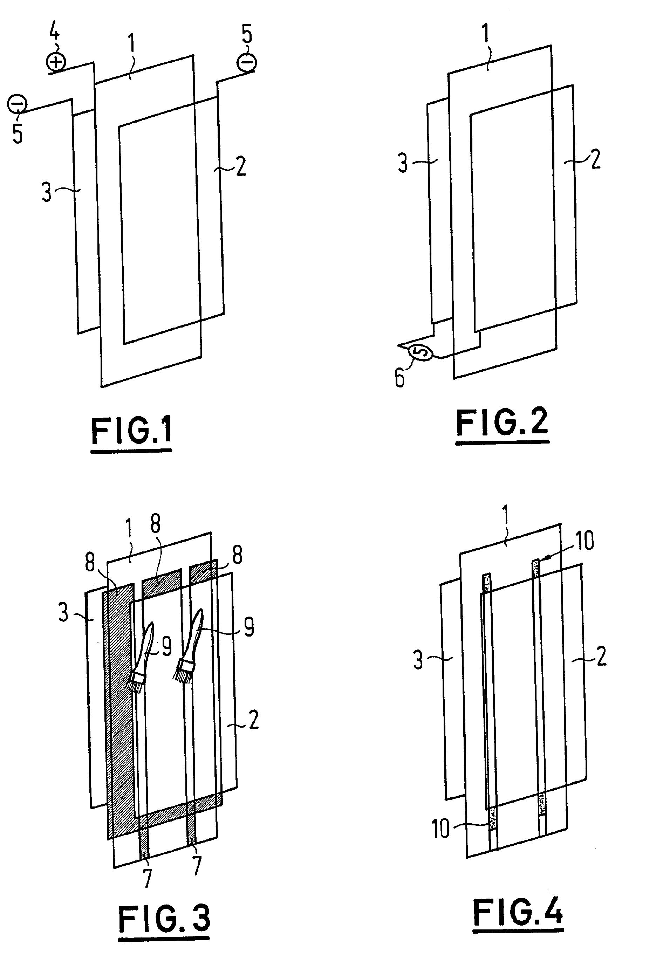

Die Fig. 1 und 2 zeigen schematisch die Anordnung von leitendem Elektrodenmaterial 1 zwischen zwei leitenden Platten 2, 3 während des Ätzprozesses, bei dem die gesamte Anordnung in eine nicht dargestellte Elektrolytlösung einer Ätzzelle eingetaucht ist. Bei der in Fig. 1 dargestellten Variante des elektrochemischen Ätzens ist das Elektrodenmaterial 1, bspw. eine Aluminiumfolie, an dem positiven Pol einer Spannungsquelle angeschlossen. Die beiden leitenden Platten 2, 3 sind dagegen mit dem negativen Pol 5 der Spannungsquelle verbunden. Das Ätzen findet dann durch Anschalten eines Gleichstroms oder eines gepulsten Stromes statt.

Fig. 2 zeigt eine ähnliche Anordnung von Elektrodenmaterial 1 und leitenden Platten 2, 3, die zum Ätzen in eine nicht dargestellte Elektrolytlösung eingetaucht sind. In diesem Fall sind die Platten 2, 3 mit einer Wechselspannungsquelle 6 verbunden. Das Elektrodenmaterial 1 ist nicht mit einer Spannungsquelle verbunden.

Es sind ebenso rein chemische Ätzverfahren denkbar, bei denen das Elektrodenmaterial zum chemischen Ätzen einfach in entsprechende Ätzlösungen getaucht wird. In diesem Fall kann auf die leitenden Platten 2, 3 verzichtet werden.

Damit nicht die gesamte Oberfläche des Elektrodenmaterials 1 geätzt wird, sondern auch nicht-geätzte Oberflächenzonen auf dem Elektrodenmaterial 1 ausgebildet werden, ist erfindungsgemäß, wie in Fig. 3 gezeigt, in bestimmten, hier streifenförmigen Zonen ein elektrisch isolierender Belag 7 auf das Elektrodenmaterial 1, bspw. eine nicht-geätzte Aluminiumfolie, aufgebracht. Der Belag 7 verhindert eine elektrochemische Korrosion während des nachfolgenden Ätzprozesses, bei dem der auf der Oberfläche aufgebrachte Belag 7 zwischen dem Elektrodenmaterial 1 und den leitenden Platten 2, 3 in einer Ätzzelle angeordnet ist. Während des elektrochemischen Ätzens fließt Strom von dem Elektrodenmaterial 1 zu den Platten 2, 3, außer in den mit dem Belag 7 abgeschirmten Zonen. Zur Abschirmung können insbesondere auch säurefeste Beläge 7 verwendet werden, die eine chemische Korrosion verhindern.

Zum Aufbringen des Belages 7 werden zunächst die zu ätzenden Bereiche des Elektrodenmaterials 1 mit Masken 8 abgedeckt und anschließend ein vorzugsweise flüssiges Belagmaterial, wie bspw. elektrisch isolierende Lacke oder säurefeste Kunstharze, auf die von den Masken 8 nicht abgedeckten Bereiche des Elektrodenmaterials 1 aufgebracht. Dies kann, wie beispielhaft dargestellt, durch Auftragen mit einem Pinsel 9, durch Aufsprühen oder dgl. geschehen. Nach dem Aufbringen dieses Belages 7 werden die Masken 8 entfernt, bevor das Elektrodenmaterial 1 dem Ätzprozess unterworfen wird. Der Belag 7 kann aber z. B. auch aus einer elektrisch isolierenden Folie bestehen, die auf der Oberfläche des Elektrodenmaterials 1 bspw. aufgrund von Eigenhaftung gehalten oder aufgeklebt wird.

Nach dem Ätzen werden die als Belag 7 dienenden Lacke oder Kunstharze, die das Elektrodenmaterial 1 während des Ätzens vor elektrochemischer Korrosion schützen, in einer organischen Lösung entfernt. Um streifenförmige Zonen zu erhalten, besteht der Belag 7 aus schmalen Streifen, die in Längsrichtung des bandförmigen Elektrodenmaterials 1 in vorgegebenem Abstand voneinander auf dessen Oberfläche aufgebracht sind. Der Abstand der Belagstreifen entspricht der Breite des für die Herstellung eines gewickelten Kondensators benötigten Elektrodenstreifens. Allerdings sind auch andere geometrische Formen des Belages 7 denkbar. Diese können auch an beliebiger anderer Stelle auf dem Elektrodenmaterial 1 angeordnet werden.

Fig. 4 zeigt eine weitere Möglichkeit zur Herstellung nicht-geätzter Oberflächenzonen auf dem Elektrodenmaterial 1 gemäß der vorliegenden Erfindung.

Hierbei sind gesonderte streifenförmige Schutzabschirmungen 10 aus nicht-leitendem Material in der Ätzzelle vor den leitenden Platten 2 und/oder ggf. 3 angeordnet. Während des Ätzprozesses wird das Elektrodenmaterial 1 an die Schutzabschirmungen 10 angelegt, so dass das Elektrodenmaterial 1 und die Schutzabschirmungen 10 in direktem Kontakt miteinander stehen. Die Schutzabschirmungen 10 bilden so eine elektrische Abschirmung für die abzudeckenden Zonen und verhindern dort den Stromfluss. Daher findet das Ätzen nur in den Bereichen ohne Schutzabschirmungen 10 statt.

Die Schutzabschirmungen 10 können fest in der Ätzzelle positioniert oder einteilig mit ihr ausgebildet sein.

Die in Fig. 3 und 4 dargestellten alternativen Methoden zur Ausbildung nicht-geätzter Zonen auf dem Elektrodenmaterial 1 werden in der Regel auf beiden

Seiten des Elektrodenmaterials 1 gleichermaßen angewendet, so dass auf jeder Oberfläche einander entsprechende, nicht-geätzte Zonen entstehen.

Das Elektrodenmaterial 1 kann nach dem Ätzen einer anodischen Oxidation unterzogen werden, bei der sowohl die geätzten als auch die nicht-geätzten Zonen oxidiert werden, um eine Oxidschicht auf der Oberfläche des Elektrodenmaterials 1 auszubilden. Im Falle einer Aluminiumfolie als Elektrodenmaterial 1 bildet sich eine Aluminiumoxidschicht.

Das so behandelte Elektrodenmaterial 1 wird anschließend in die gewünschte Elektrodenform gebracht. Bei den dargestellten Ausführungsformen mit streifenartigen Belägen 7 bzw. Schutzabschirmungen 10 werden Streifenelektroden aus dem Elektrodenmaterial 1 in Längs- und Querrichtung so ausgeschnitten, dass zumindest einer ihrer Ränder nicht geätzt ist. Dabei können aus großflächigem Elektrodenmaterial 1 mehrere streifenförmige Elektroden geschnitten werden. Die nicht-geätzten Zonen sehen einen besonders guten elektrischen und thermischen Kontakt insbesondere entlang den Rändern der Elektrodenstreifen vor. Auf diese Weise wird der äquivalente Serienwiderstand (ESR) und der Leistungsverbrauch der Elektroden verbessert, wenn die als Folien ausgebildeten Elektroden bspw. zu elektrolytischen Kondensatoren aufgerollt sind. Bei Elektroden aus Bandmaterial ist so eine rationelle Fertigung möglich.

### Bezugszeichenliste:

- 1: Elektrodenmaterial
- 2, 3: leitende Platten
- 4: positiver Pol
- 5: negativer Pol
- 6: Wechselstromquelle
- 7: Belag
- 8: Maske
- 9: Pinsel
- 10: Schutzabschirmung

## Patentansprüche

1. Verfahren zur Herstellung von Elektroden für Elektrolyt-Kondensatoren aus leitendem Elektrodenmaterial (1), insbesondere aus einer Folie, wie einer Aluminiumfolie, welche zur Vergrößerung der Oberfläche einem chemischen oder elektrochemischen Ätzprozess ausgesetzt wird, **dadurch gekennzeichnet, dass** während des Ätzprozesses wenigstens eine Zone der Oberfläche des Elektrodenmaterials (1) mit einem ätzfesten Belag (7) und/oder von einer gesonderten Schutzabschirmung (10) in einer Ätzzelle abgedeckt ist und die Elektrode nach dem Ätzen aus dem Elektrodenmaterial (1) derart ausgeschnitten, ausgestanzt oder dergleichen herausgearbeitet wird, dass die nicht geätzte Zone wenigstens einen Randbereich, insbesondere einen Randstreifen der Elektrode bildet.

2. Verfahren nach Anspruch 1, **dadurch gekennzeichnet, dass** als Belag (7) eine Schicht oder Folie dient, welche auf die Oberfläche bspw. durch Auftragen, Auflegen, Aufkleben oder dergleichen aufgebracht und nach dem Ätzen wieder abgezogen wird.

3. Verfahren nach Anspruch 1 oder 2, **dadurch gekennzeichnet, dass** als Belag (7) ein Lack oder ein Kunstharz dient, wobei der Lack oder der Kunstharz bspw. durch Sprühen oder Pinseln auf die Oberfläche aufgebracht und nach dem Ätzen mittels einer bspw. organischen Lösung abgelöst wird.

4. Verfahren nach einem der Ansprüche 1 bis 3, **dadurch gekennzeichnet, dass** der Belag (7), insbesondere der Lack oder der Kunstharz, unter Verwendung einer Maske (8) auf die Oberfläche aufgebracht wird.

5. Verfahren nach einem der vorhergehenden Ansprüche, **dadurch gekennzeichnet, dass** der Belag (7) als Isoliermaterial ausgebildet ist und während des elektrochemischen Ätzprozesses eine elektrische Abschirmung auf dem leitenden Elektrodenmaterial (1) bildet.

6. Verfahren nach einem der vorhergehenden Ansprüche, **dadurch gekennzeichnet, dass** die Schutzabschirmung (10) aus nicht-leitendem Material besteht und in der Ätzzelle so zwischen dem leitenden Elektrodenmaterial (1) und leitenden Platten (2, 3) der Ätzzelle angeordnet ist, dass die Schutzabschirmung (10) in direktem Kontakt mit dem Elektrodenmaterial (1) steht und während des elektrochemischen Ätzprozesses eine elektrische Abschirmung für eine entsprechende Zone des Elektrodenmaterials (1) bildet.

7. Verfahren nach einem der vorhergehenden Ansprüche, **dadurch gekennzeichnet, dass** die Zonen als parallele Streifen oder dgl. voneinander beabstandete, in Längsrichtung des z. B. als Bandmaterial ausgebildeten Elektrodenmaterials verlaufende Bereiche ausgebildet werden.

8. Verfahren nach einem der vorhergehenden Ansprüche, **dadurch gekennzeichnet, dass** das Elektrodenmaterial (1) nach dem Ätzen einer anodischen Oxidation ausgesetzt wird.

9. Verfahren nach Anspruch 8, **dadurch gekennzeichnet, dass** die geätzte und die nicht-geätzte Zone anodisch oxidiert werden.

10. Verfahren nach einem der vorhergehenden Ansprüche, **dadurch gekennzeichnet, dass** das Ätzen unter Ausbildung wenigstens einer nicht-geätzten Zone und ggf. die Oxidation auf beiden Seiten des Elektrodenmaterials (1) durchgeführt werden.

11. Verfahren nach Anspruch 10, **dadurch gekennzeichnet, dass** je eine nicht-geätzte Zone auf beiden Seiten des Elektrodenmaterials (1) einander entsprechend ausgebildet wird.

12. Verfahren nach einem der vorhergehenden Ansprüche, **dadurch gekennzeichnet, dass** aus großflächigem Elektrodenmaterial (1) entsprechend der Anzahl der nicht-geätzten Zonen mehrere, z.B. streifenartige Elektroden herausgearbeitet werden.

13. Elektrode aus einem leitenden Elektrodenmaterial (1), insbesondere aus einer z. B. als Bandmaterial ausgebildeten Folie, wie einer Aluminiumfolie, welches eine ein- oder beidseitig geätzte und ggf. anodisch oxidierte Oberfläche aufweist, **dadurch gekennzeichnet, dass** in wenigstens einem Randbereich, vorzugsweise Randstreifen, der Oberfläche mindestens eine nicht-geätzte Zone ausgebildet ist.

14. Elektrode nach Anspruch 13, **dadurch gekennzeichnet, dass** nicht-geätzte Zonen auf beiden Seiten des Elektrodenmaterials ausgebildet sind.

15. Elektrode nach Anspruch 14, **dadurch gekennzeichnet, dass** nicht-geätzte Zonen auf jeder Seite des Elektrodenmaterials einander entsprechend angeordnet sind.

16. Elektrode nach einem der Ansprüche 13 bis 15, **dadurch gekennzeichnet, dass** mindestens ein Rand des Elektrodenmaterials (1) nicht geätzt ist.

17. Elektrode nach einem der Ansprüche 13 bis 16, **dadurch gekennzeichnet, dass** das Elektrodenmaterial (1) nach einem Verfahren gemäß einem der Ansprüche 1 bis 12 hergestellt ist.
